# EUROPÄISCHE PATENTSCHRIFT

(11) **EP 1 923 681 B1**
(45) Veröffentlichungstag und Bekanntmachung des Hinweises auf die Patenterteilung: **03.10.2012**
(21) Anmeldenummer: 07022054.6
(22) Anmeldetag: 13.11.2007
(51) Int. Cl.: G01L 1/22, G01L 5/22, G05G 9/047

(54) **Schalt-, Steuer- und/oder Sensoreinrichtung und zugehöriges Herstellungsverfahren**
Switching, controlling and/or sensor device and corresponding method of manufacture
Dispositif de commutation, de commande et/ou de capteur et son procédé de fabrication

(30) Priorität: 15.11.2006 DE 102006054503
(43) Veröffentlichungstag der Anmeldung: 21.05.2008
(73) Patentinhaber: Strukturleichtbau e.V., 09126 Chemnitz (DE); Modespitze Plauen GmbH, 08523 Plauen (DE)
(72) Erfinder: Elsner, Holg, Dipl.-Ing., 09127 Chemnitz (DE); Heinrich, Michael, Dipl.-Ing., 09112 Chemnitz (DE); Kunzmann, Jan, Dr.-Ing., 09126 Chemnitz (DE); Ulbricht, Jens, Dipl.-Ing., 09306 Königshain-Wiederau (DE); Kroll, Lothar, Dr.-Ing. habil., 01324 Dresden (DE); Zipplies, Eberhard, Dr.-Ing., 09120 Chemnitz (DE); Reinhardt, Andreas, 08529 Plauen (DE)
(74) Vertreter: Steiniger, Carmen

(56) Entgegenhaltungen:
- EP-A- 0 545 832
- EP-A- 1 617 197
- EP-A1- 1 631 122
- WO-A-89/11633
- CH-A- 377 555
- DE-A1- 2 148 190
- DE-A1- 10 112 405
- US-A- 2 812 409
- US-A1- 2006 164 383

## Beschreibung

Die vorliegende Erfindung betrifft eine Schalt-, Steuer- und/oder Sensoreinrichtung sowie ein Verfahren zu deren Herstellung. Im Stand der Technik ist es bekannt, Schalt- und Steuereinrichtungen wie Joysticks oder durch Pedale einzusetzen, um mit Hilfe eines betätigbaren Steuerhebels oder Pedals Objekte zu steuern oder zu positionieren oder Zustände zu schalten. Dabei wird die Bewegung des Steuerhebels in verschiedenen Richtungen beispielsweise über Potentiometer erfasst und es werden entsprechende Schaltsignale an ein zu steuerndes Modul übertragen. Während bei digitalen Joysticks nur die Bewegungsrichtung des Steuerhebels als Signal übertragen wird, kann bei analogen Joysticks zusätzlich zur Erfassung des Auslenkungswinkels des Joysticks entlang der x-, y- und der z-Achse die Intensität oder auch die Beschleunigung der Auslenkung erfasst werden.

Da insbesondere die bei der Bewegungserfassung des Steuerhebels eines Joysticks oder Pedals eingesetzten Sensoren hohen mechanischen Belastungen ausgesetzt sind, ist es erforderlich, möglichst langlebige und zuverlässige Bewegungserfassungsmechanismen zur Verfügung zu stellen.

Die Druckschrift EP 1 617 197 A2 beinhaltet einen Kraftsensor. Gemäß einer Ausführungsvariante ist eine deformierbare Membran an einem Schaft befestigt. Auf der deformierbaren Membran sind Deformations- oder Spannungsmessvorrichtungen, jeweils in einem Winkel von 90° voneinander beabstandet vorgesehen. Als Messvorrichtungen können piezoresistive, metallische oder Dehnungsmesseinrichtungen verwendet werden. In einer weiteren Ausführungsvariante sind die Messeinrichtungen aus Kondensatorplatten ausgebildet, von denen jeweils eine auf der deformierbaren Membran angeordnet ist und eine als zugehörige Kondensatorplatte gegenüber in einem Aufsatz angeordnet ist. In einem weiteren Ausführungsbeispiel ist das deformierbare Element in Form von vier orthogonal zueinander ausgerichteten Armen ausgebildet, auf welchen jeweils eine Messvorrichtung angeordnet ist, um die Deformation zu messen, wenn der mit den Armen mittig verbundene Schaft bewegt wird.

Die Druckschrift EP 0 545 832 A1 offenbart einen Joystick mit einen Steuerhebel, der über Verbindungselemente mit einer in einem Sockel drehbar gelagerten Kugel verbunden ist. In den Umfang der Kugel sind jeweils in einem Winkel von 90° voneinander beabstandet radiale Balken in Nuten eingeführt, deren von der Kugel abstehendes Ende in jeweils einer Stütze durch Schrauben verankert ist. Auf den radialen Balken sind Dehnungsmessvorrichtungen vorgesehen, welche bei einer Bewegung des Steuerknüppels, die durch die Verbindungselemente auf die Kugel übertragen wird, die Dehnung der radialen Balken erfassen.

Die Druckschrift DE 2 148 190 A1 beschreibt einen Dehnungsmessstreifen, welcher aus einer elastischen Textillitze mit aus stark dehnbarem Material bestehenden elastischen Kettfäden und hiermit verwebten unelastischen Schussfäden besteht, wobei die Schussfäden aus einer elektrisch leitende Teilchen enthaltenden Schicht überzogen sind. Die Herstellung des Dehnungsmessstreifens erfolgt folgendermaßen: Zunächst wird die Textillitze mit einer die elektrisch leitenden Teilchen sowie ein Bindemittel enthaltenden Dispersion gut getränkt und dann während des darauf folgenden Trocknungsvorganges zum Erhärten des Bindemittels periodisch auf eine bestimmte Länge gedehnt und entspannen gelassen. Durch einen solchen Vorgang wird erreicht, dass das getrocknete oder erhärtete Bindemittel von den Kettfäden infolge der periodischen Dehnung und Entspannung abfällt, während es auf den Schussfäden haftet, sodass im Ergebnis ein Dehnungsmessstreifen erhalten wird, bei dem lediglich die Schussfäden mit elektrisch leitenden Teilchen beschichtet sind.

Gemäß der Druckschrift CH 377555 A wird vorgeschlagen, einen mäanderförmig gewundenen Widerstandsdraht zunächst auf ein Grundgewebe aufzulegen und daraufhin den Widerstandsdraht durch Garn auf das Grundgewebe anzuweben.

Es ist daher die Aufgabe der vorliegenden Erfindung, eine Schalt-, Steuer- und/oder Sensoreinrichtung mit einer hohen Flexibilität und Zuverlässigkeit sowie ein Verfahren zu deren Herstellung zur Verfügung zu stellen.

Die Aufgabe wird durch eine Schalt-, Steuer- und/oder Sensoreinrichtung mit wenigstens einem betätigbaren Steuerelement gelöst, das an wenigstens einem mit wenigstens einem starren Festkörper verbundenen Federelement so befestigt ist, dass das wenigstens eine Federelement in wenigstens einer Richtung elastisch ist, wobei das wenigstens eine Federelement wenigstens einen elektrischen Leiter aufweist.

Die Erfindung ermöglicht es, eine flexibel einsetzbare und zuverlässige Schalt-, Steuer und/oder Sensoreinrichtung zur Verfügung zu stellen. Durch die Elastizität des Federelementes kann der elektrische Leiter gedehnt oder gestaucht werden, wodurch der elektrische Widerstand des elektrischen Leiters veränderbar ist. Diese Widerstandsänderung kann als Ausgangssignal der Schalt-, Steuer- und/oder Sensoreinrichtung verwendet werden, wodurch beispielsweise ein Joystick, ein Gaspedal oder auch eine Überwachungseinrichtung einer passiven Struktur realisierbar ist.

Gemäß einer bevorzugten Gestaltungsvariante der Erfindung ist der elektrische Leiter eine Struktur zur Dehnungserfassung bzw. -messung. Auf diese Weise kann eine Krafteinwirkung auf das betätigbare Steuerelement, das mit dem wenigstens einen Federelement verbunden ist, eine Dehnung oder Stauchung des Federelementes hervorrufen, was eine Widerstandsänderung des elektrischen Leiters zur Folge hat, wodurch ein entsprechender Schalt- und/oder Steuerimpuls oder ein Sensorsignal durch die Schalt-, Steuer- und/oder Sensorreinrichtung ausgelöst werden kann.

Der elektrische Leiter ist genäht oder gestickt befestigt. Dadurch sind verschiedenste Leitbahnformen auf einfache Weise herstellbar und in, an oder auf dem wenigstens einen Federelement integrierbar.

Gemäß einer vorteilhaften Ausführungsform der Erfindung ist der elektrische Leiter ein elektrisch leitfähiger Faden oder ein Draht. Obwohl der elektrische Leiter grundsätzlich auch aus Fasern, einem Streifen, einer Platte oder einem Band ausgebildet sein kann, eignen sich elektrisch leitfähige Fäden oder Drähte besonders gut, um den elektrischen Leiter z. B. durch ein textiltechnologisches Verfahren in ein Material einzubringen.

Entsprechend einer besonders günstigen Variante der Erfindung ist der elektrische Leiter in ein textiles Material genäht oder gestickt oder auf dem textilen Material, das in ein zumindest teilweise elastisches Trägermaterial eingebettet ist, verlegt und durch Nähen oder Sticken befestigt. Textile Materialien haben den Vorteil, dass sie leicht benähbar oder bestickbar sind und herkömmliche Näh- und Sticktechnologien größtenteils auf textile Materialien abgestimmt sind. Grundsätzlich ist es jedoch auch möglich, den elektrischen Leiter in ein Filz, Folien, Schäume, Leder-, Schwamm-, Kunststoff- oder ein anderes geeignetes Material zu nähen oder zu sticken. Durch die Einbindung des mit dem elektrischen Leiter benähten oder bestickten textilen Materials in das zumindest teilweise elastische Trägermaterial kann der elektrische Leiter fixiert werden und mittels des elastischen Trägermaterials gedehnt oder gestaucht werden, um hierdurch eine Änderung des elektrischen Widerstandes des elektrischen Leiters hervorzurufen, welche als Schalt-, Steuer- und/oder Sensorsignal in der Schalt-, Steuer- und/oder Sensoreinrichtung verwendet werden kann.

Es ist besonders von Vorteil, wenn das Trägermaterial ein gieß- und/oder spritzbares und härtbares Material ist, das nach dem Härten zumindest teilweise elastisch ist. Somit ist es möglich, das mit dem elektrischen Leiter benähte oder bestickte textile Material in das Trägermaterial einzugießen oder einzuspritzen, wobei sich eine große Formenvielfalt für das Federelement ergibt.

In einer besonders praktischen Ausführungsform der vorliegenden Erfindung ist das wenigstens eine Federelement aus einem duroplastischen Material ausgebildet und in ein thermoplastisches Material eingebracht. Thermoplaste sind grundsätzlich nicht für Dehnungsmessungen oder dergleichen verwendbar, da diese relativ schnell brechen. Durch die spezielle Ausführungsvariante der vorliegenden Erfindung ist jedoch ein Thermoplast über das strukturintegrierte, aus einem duroplastischen Material ausgebildete Federelement mit bewegbar, so dass festgestellt werden kann, welche Kraftwirkungen auf das thermoplastische Material ausgeübt werden. Das duroplastische Material des Federelementes ist in geeigneter Form, beispielsweise durch mechanische Verklammerung, durch Kleben oder durch chemische Bindung mit dem thermoplastischen Material verbindbar.

Gemäß einer bevorzugten Variante der Erfindung ist der elektrische Leiter mäanderförmig ausgebildet. Mäanderförmige Leitbahnstrukturen eignen sich besonders gut, um Strukturen für Dehnungsmessungen herzustellen, um hiermit besonders zuverlässig Dehnungen oder Stauchungen des mit dem elektrischen Leiter versehenen Federelementes erfassen zu können.

Es ist besonders praktisch, wenn das Trägermaterial ein kunststoffhaltiger Faserverbundwerkstoff ist. Kunststoffe wie Duroplaste, Thermoplaste oder Elastomere lassen sich gut gießen oder spritzen, so dass hiermit der elektrische Leiter auf einfache Weise in das Trägermaterial eingebettet werden kann. Faserverbundwerkstoffe besitzen zudem den Vorteil, dass sie durch ihren Aufbau aus einer bettenden Matrix und verstärkenden Fasern eine sehr gute Festigkeit besitzen und damit hochgradig beanspruchbar sind. Somit kann das mit Hilfe des Trägermaterials ausgebildete Federelement mit einer hohen Lebensdauer hergestellt werden.

Es hat sich als besonders günstig erwiesen, wenn der elektrische Leiter dreidimensional ausgebildet ist. Mit dieser Ausführungsform können Krafteinwirkungen auf das wenigstens eine Federelement und damit den elektrischen Leiter in einer Längenrichtung, einer Breitenrichtung und einer Höhenrichtung des Federelementes erfasst werden. Durch die dreidimensionale Signalstruktur ist es somit möglich, Dehnungs-, Druck- und auch Schubmessungen an einer Struktur vornehmen zu können.

Hierbei ist es besonders vorteilhaft, wenn der elektrische Leiter unterschiedliche Längen in einer Längenrichtung, einer Breitenrichtung und einer Höhenrichtung des Federelementes aufweist. Mit einer solchen Struktur lässt sich aus der Höhe des jeweils erfassten Signals erkennen, welcher Schaltzustand realisiert werden soll bzw. welche Steuerung vorgenommen werden soll.

Gemäß einer weiteren vorteilhaften Ausführungsvariante der Erfindung ist das wenigstens eine Federelement eine Blattfeder, eine gebogene Feder, eine winklige Feder oder eine Torsionsfeder. Als Blattfedern kommen beispielsweise platten- oder streifenartige Strukturen in Betracht, welche sowohl rechteckig, gebogen oder auch winklig ausgebildet sein können. Solche Blattfedern können durch Krafteinwirkung mittels des Steuerelementes in ihrer Höhenrichtung verbogen werden, wobei durch die Dehnung bzw. Stauchung des in der Blattfeder vorgesehenen elektrischen Leiters eine Formveränderung der Feder und/oder eine Krafteinwirkung auf die Feder erfasst werden kann, woraufhin ein Schalt-, Steuer- und/oder Sensorrrsignal abgegeben werden kann. Ist das Federelement als eine Torsionsfeder ausgebildet, kann eine Drehung der Torsionsfeder mit Hilfe des Steuerelementes durch die Widerstandsänderung des elektrischen Leiters erfasst werden und daraufhin ein Schalt-, Steuer- und/oder Sensorsignal ausgegeben werden.

Um die Schalt-, Steuer- und/oder Sensorreinrichtung für das Schalten mehrerer Schaltzustände oder das Steuern mehrerer Funktionen verwenden zu können, ist es von Vorteil, wenn die Schalt-, Steuer- und/oder Sensoreinrichtung wenigstens zwei miteinander verbundene Federelemente aufweist, die in einem Winkel zueinander angeordnet sind. Vorzugsweise ist hierbei das Steuerelement an der Verbindungsstelle der miteinander verbundenen Federelemente angeordnet und mit den Federelementen verbunden. Auf diese Weise kann die bei einer Betätigung des Steuerelementes erfolgende Krafteinwirkung auf die wenigstens zwei miteinander verbundenen Federelemente ausgeübt werden, wobei die wenigstens zwei miteinander verbundenen und im Winkel zueinander angeordneten Federelemente unterschiedliche Kraftrichtungen erfassen können. Entsprechend können für die verschiedenen Kraftrichtungen separate Schalt-, Steuer- und/oder Sensorsignale durch die Schalt-, Steuer- und/oder Sensoreinrichtung abgegeben werden.

Gemäß einem bevorzugten Beispiel der Erfindung sind die Federelemente in einem Winkel von 90° zueinander angeordnet. Somit können im Winkel von 90° zueinander erfolgende Kraftwirkungen auf das Steuerelement mittels der in den Federelementen vorgesehenen elektrischen Leiter erfasst werden, was sich besonders gut für den Aufbau eines Joysticks eignet.

In einer weiteren Ausführungsform der vorliegenden Erfindung ist die Schalt-, Steuer-und/oder Sensoreinrichtung telemetrisch mit einem Empfänger verbunden. So kann der Empfänger, beispielsweise durch eine an dem elektrischen Leiter vorgesehene Antennenstruktur, Signale von der Schalt-, Steuer- und/oder Sensoreinrichtung empfangen.

In einer weiteren Variante der Erfindung weist die Schalt-, Steuer- und/oder Sensoreinrichtung wenigstens eine Piezostruktur auf, durch welche die Schalt-, Steuer- und/oder Sensoreinrichtung und/oder eine telemetrische Verbindung der Schalt-, Steuer- und/oder Sensoreinrichtung mit einem Empfänger mit Energie versorgt wird. Somit kann ein autark arbeitendes System zur Verfügung gestellt werden, wobei durch die Schalt-, Steuer- und/oder Sensoreinrichtung Schalt-, Steuer- und/oder Messfunktionen ausgeübt werden können und Signale an einen Empfänger gesendet werden können und darüber hinaus die Schalt-, Steuer- und/oder Sensoreinrichtung mit Energie versorgt wird.

Die Aufgabe wird ferner durch ein Verfahren zum Herstellen einer Schalt-, Steuer und/oder Sensoreinrichtung gelöst, wobei das Verfahren folgende Schritte aufweist: Vorsehen eines betätigbaren Steuerelementes, wenigstens eines starren Festkörpers, wenigstens eines Materials für wenigstens ein Federelement und wenigstens eines elektrischen Leiters; Einbringen des wenigstens einen elektrischen Leiters in das Material des wenigstens einen Federelementes; Verbinden des wenigstens einen Federelementes mit dem wenigstens einen starren Festkörper; und Befestigen des Steuerelementes mit dem wenigstens einen Federelement.

Indem der elektrische Leiter in das wenigstens eine Federelement eingebracht wird, kann die Federwirkung des Federelementes dazu genutzt werden, eine Widerstandsänderung des elektrischen Leiters in Abhängigkeit von einer Krafteinwirkung auf das betätigbare Steuerelement hervorzurufen, welche wiederum für eine Signalerzeugung bei der Schalt-, Steuer- und/oder Sensoreinrichtung verwendet werden kann.

Es ist ganz besonders von Vorteil, wenn als elektrischer Leiter eine Struktur zur Dehnungserfassung in das Federelement eingebracht wird. Somit kann eine Dehnung oder Stauchung der Dehnungsmessstruktur in Abhängigkeit von einer Krafteinwirkung auf das betätigbare Steuerelement für eine Signalerzeugung bei der Schalt-, Steuer- und/oder Sensoreinrichtung genutzt werden.

Es ist besonders günstig, wenn der elektrische Leiter genäht oder gestickt wird oder auf ein Material aufgelegt und durch Nähen oder Sticken an dem Material befestigt wird. Somit kann eine Schalt-, Steuer- und/oder Sensoreinrichtung ausgebildet werden, die besonders flexibel im Hinblick auf die Ausgestaltung des elektrischen Leiters ist, da dieser in vielfältigen Varianten näh- oder stickbar bzw. durch Nähen oder Sticken befestigbar ist.

In einer besonders vorteilhaften Ausführungsform der Erfindung wird der elektrische Leiter in oder auf ein textiles Material genäht oder gestickt und das textile Material wird in ein Trägermaterial eingegossen oder von einem Trägermaterial umspritzt. Somit kann der elektrische Leiter zunächst unabhängig von dem Trägermaterial auf einfache Weise in oder auf das textile Material eingebracht werden und danach in dem Trägermaterial fixiert werden, um hieraus ein geeignetes Federelement mit dem wenigstens einen elektrischen Leiter auszubilden.

In einem bevorzugten Beispiel der Erfindung wird der elektrische Leiter mäanderförmig ausgebildet. Hierdurch können mäanderförmige Leitbahnstrukturen erzeugt werden, welche sich besonders gut als Strukturen zur Dehnungsmessung eignen, wodurch Dehnungen oder Stauchungen des Federelementes in Folge einer Betätigung des Steuerelementes besonders zuverlässig erfasst werden können.

Es ist ganz besonders günstig, wenn der elektrische Leiter dreidimensional ausgebildet wird. Somit können Betätigungen des Steuerelementes in einer Längen-, einer Breiten- und einer Höhenrichtung durch den elektrischen Leiter erfasst werden und als Signale ausgegeben werden. Auf diese Weise können nicht nur Dehnungsmessungen, sondern auch Druck- und/oder Schubmessungen an der mit dem erfindungsgemäßen Verfahren hergestellten Struktur durchgeführt werden bzw. Dehnungs-, Druck- und/oder Schubeinwirkungen als Schalt-, Steuer- und/oder Sensorsignale ausgegeben werden.

Vorteilhafte Ausführungsformen der Erfindung und deren Funktion werden im Folgenden anhand der Figuren der Zeichnung erläutert, wobei
- Figur 1: schematisch einen Grundaufbau einer Ausführungsform einer Schalt-, Steuer- und/oder Sensoreinrichtung gemäß der vorliegenden Erfindung zeigt;
- Figur 2: schematisch anhand eines Beispiels das Sticken oder Nähen eines elektrischen Leiters in ein textiles Material zeigt;
- Figur 3: schematisch eine in ein Trägermaterial eingebrachte Leitbahnstruktur zeigt;
- Figur 4a bis 4g: schematisch mögliche Geometrien für die Ausbildung des wenigstens einen Federelementes der erfindungsgemäßen Schalt-, Steuer-und/oder Sensoreinrichtung zeigen; und
- Figur 5 bis Figur 10: schematisch verschiedene Ausführungsvarianten für die Schalt-, Steuer und/oder Sensoreinrichtung gemäß der vorliegenden Erfindung zeigen.

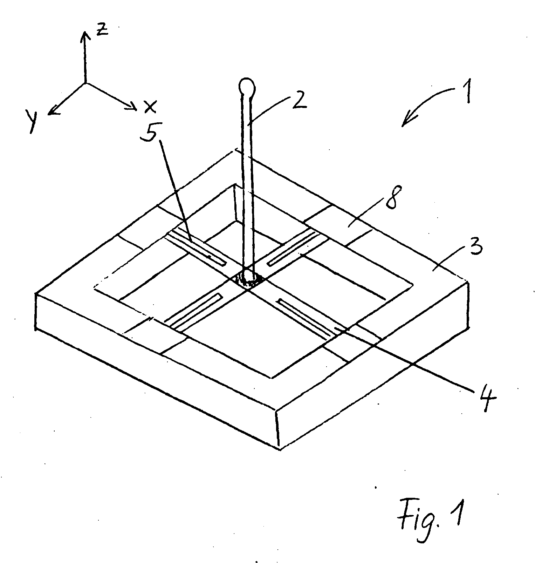

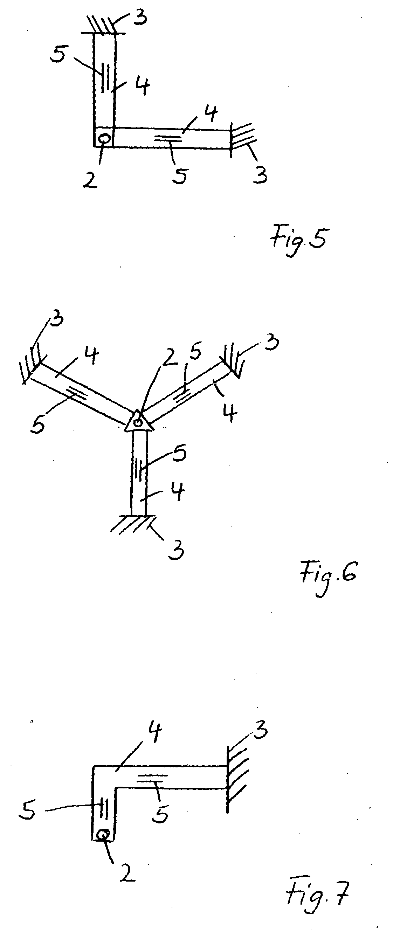

Figur 1 zeigt schematisch eine mögliche Ausführungsvariante einer Schalt-, Steuer-und/oder Sensoreinrichtung 1 gemäß der vorliegenden Erfindung. Figur 1 dient lediglich dazu, das Grundprinzip der Schalt-, Steuer- und/oder Sensoreinrichtung 1 zu verdeutlichen, wobei andere Ausführungsvarianten sowohl hinsichtlich der Geometrie als auch hinsichtlich der Anzahl und Relativanordnung der einzelnen Elemente zueinander, wie beispielsweise in den Figuren 5 bis 10 gezeigt, anders ausgebildet sein können.

Wie in Figur 1 gezeigt, weist die Schalt-, Steuer- und/oder Sensoreinrichtung 1 ein betätigbares Steuerelement 2 in Form eines Steuerhebels auf. In anderen, nicht gezeigten Ausführungsvarianten der Erfindung kann anstelle des Steuerhebels 2 auch ein Druckknopf, ein Schalter, eine Maus oder ein anderes Element verwendet werden, das geeignet ist, bewegt oder betätigt zu werden, um somit eine Kraft auf wenigstens ein Federelement 4 der Schalt-, Steuer- und/oder Sensoreinrichtung 1 auszuüben.

Das Steuerelement 2 ist in Figur 1 senkrecht und etwa mittig angeordnet. Das Steuerelement 2 ist in dem gezeigten Beispiel an seinem unteren Ende mit vier, im Winkel von 90° zueinander angeordneten Federelementen 4 verbunden. Auf diese Weise kann das Federelement 2 an der Verbindungsstelle zu den Federelementen 4 eine Kraftwirkung auf die Federelemente 4 übertragen, so dass die Federelemente 4 durch eine Betätigung bzw. Bewegung des Steuerelementes 2 gedehnt oder gestaucht werden können.

In dem in Figur 1 gezeigten Ausführungsbeispiel sind die Federelemente 4 als streifenförmige Blattfedern ausgebildet, welche einerseits mit dem Steuerelement 2 verbunden sind und andererseits mit einem starren Festkörper 3 mit Hilfe von Verbindungselementen 8 fest verbunden sind. Die Verbindungselemente 8 sind in dem in Figur 1 gezeigten Beispiel fest an den starren Festkörper 3 geschraubte Riegel. In anderen, nicht gezeigten Ausführungsvarianten der Erfindung kann jedoch jede andere geeignete Verbindungstechnik verwendet werden, die es erlaubt, die Federelemente 4 einseitig fest mit dem starren Festkörper 3 zu verbinden, um hiermit Festkörpergelenke auszubilden.

In dem in Figur 1 gezeigten Beispiel sind die Federelemente 4 zumindest in z-Richtung elastisch, so dass sie bei Einwirkung einer Kraft durch das Steuerelement 2 nach oben und/oder unten federn können.

Die Federelemente 4 bestehen in der Ausführungsform von Figur 1 aus einem kunststoffhaltigen Faserverbundwerkstoff, in welchem jeweils wenigstens ein in ein textiles Material genähter oder gestickter elektrischer Leiter 5 eingebracht ist.

Anstatt eines genähten oder gestickten elektrischen Leiters 5 kann jedoch auch ein einfacher elektrischer Leiter, wie beispielsweise ein Draht oder ein Metallstreifen, in den Federelementen 4 vorgesehen werden. Vorzugsweise wird als elektrischer Leiter 5 eine Struktur zur Erfassung von Dehnungen eingesetzt.

Die elektrischen Leiter 5 der Federelemente 4 weisen elektrisch kontaktierbare Kontakte 9 auf, welche in dem gezeigten Beispiel ebenfalls genäht oder gestickt sind, aber auch durch Löten, Bonden, Kleben, Schweißen, Ultraschall oder mit leitfähigem Epoxidharz ausgebildet werden können.

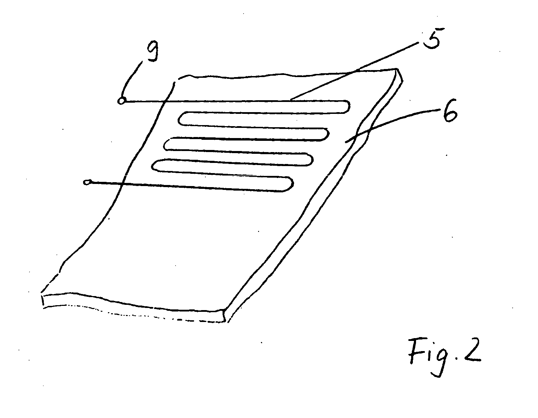

Figur 2 zeigt schematisch in einem Beispiel das Nähen oder Sticken eines elektrischen Leiters 5 in ein textiles Material 6. In dem in Figur 2 gezeigten Beispiel ist der elektrische Leiter 5 mäanderförmig in das textile Material genäht oder gestickt, um hierdurch eine Struktur zur Dehnungsmessung auszubilden, welche durch die Kontakte 9 elektrisch kontaktierbar ist.

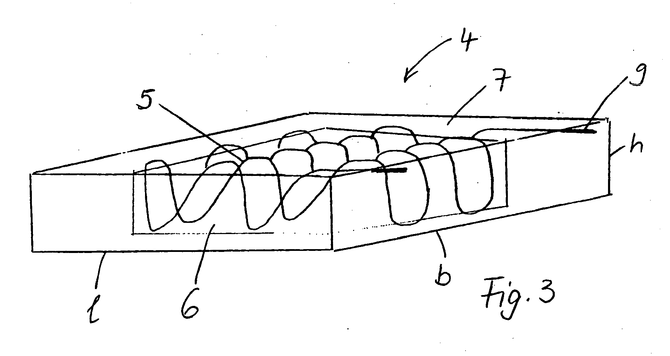

Figur 3 zeigt schematisch einen möglichen Aufbau einer dreidimensionalen Struktur eines elektrischen Leiters 5 in einem Trägermaterial 7. Der elektrische Leiter 5 von Figur 3 wurde vor seinem Einbringen in das Trägermaterial 7 dreidimensional in ein textiles Material 6 genäht oder gestickt. Hierdurch weist der elektrische Leiter 5 eine Ausdehnung in einer Längenrichtung I, eine Ausdehnung in einer Breitenrichtung b und eine Ausdehnung in einer Höhenrichtung h des Trägermaterials 7 auf. Der elektrische Leiter 5 ist sowohl in der Längenrichtung 1, in der Breitenrichtung b als auch in der Höhenrichtung h mäanderförmig ausgebildet.

Das Trägermaterial 7 ist in dem in Figur 3 gezeigten Beispiel ein duroplastischer Faserverbundwerkstoff, welcher gieß- und/oder spritzbar und nachfolgend aushärtbar ist und nach dem Härten zumindest teilweise elastisch ist. Das Trägermaterial 7 bildet mit dem darin befindlichen, in das textile Material 7 genähten oder gestickten elektrischen Leiter 5 ein Federelement 4 für die Schalt- und/oder Steuereinrichtung 1 aus.

Wie in Figur 3 gezeigt, weist der elektrische Leiter 5 unterschiedliche Längen in der Längenrichtung I, der Breitenrichtung b und der Höhenrichtung h des Federelementes 4 auf. Somit entstehen je nach Richtung der Krafteinwirkung auf das Federelement 4 verschieden hohe Ausgangssignale des als Dehnungsmessstreifen fungierenden elektrischen Leiters 5.

Entsprechend kann aus der Höhe des gemessenen Ausgangssignals auf die Richtung der auf das Federelement 4 einwirkenden Kraft geschlossen werden.

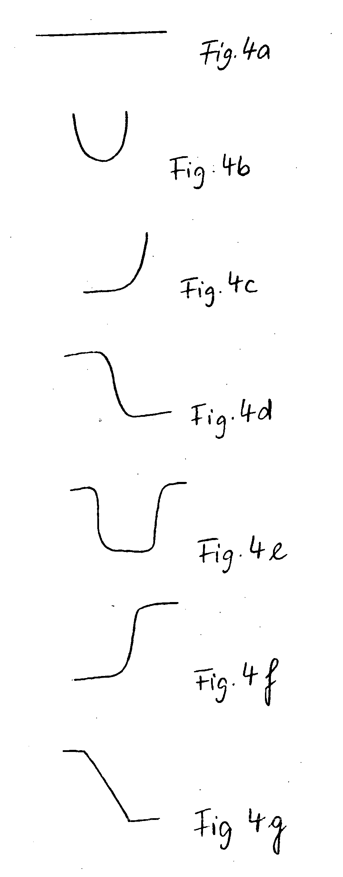

Die Figuren 4a bis 4g zeigen schematisch mögliche Geometriegrundformen von Federelementen 4, die bei der Schalt-, Steuer- und/oder Sensoreinrichtung 1 der vorliegenden Erfindung eingesetzt werden können. Die gezeigten Beispiele stellen lediglich bevorzugte Beispiele dar und sind nicht als abschließender Katalog zu sehen. Die in den Figuren 4a bis 4g gezeigten Strukturen symbolisieren Ausrichtungen von Federelementen entlang der Verbindungslinie zwischen dem starren Festkörper 3 und dem Steuerelement 2.

Gemäß Figur 4a kann ein Federelement 4, wie auch in Figur 1 gezeigt, gerade von dem starren Festkörper 3 zu dem Steuerelement 2 verlaufen.

Gemäß Figur 4b kann ein Federelement 4 U-förmig ausgebildet sein.

Gemäß Figur 4c kann ein Federelement 4 L-förmig geformt sein.

Entsprechend Figur 4d kann ein Federelement 4 S-förmig ausgebildet sein.

Entsprechend Figur 4e kann ein Federelement 4 zunächst geradlinig, mittig U-förmig und dann wieder geradlinig ausgebildet sein.

Wie in Figur 4f gezeigt, kann ein Federelement 4 auch winklig ausgebildet sein.

Entsprechend Figur 4g kann ein Federelement 4 schräg verlaufend ausgebildet sein, so dass der starre Festkörper 3 und das Steuerelement 2 auf unterschiedlichen Höhenebenen angeordnet sein können.

Ein Federelement 4 für die Schalt-, Steuer- und/oder Sensoreinrichtung 1 gemäß der vorliegenden Erfindung kann flächig, wie in Figur 1 gezeigt, als Blattfeder, gebogene Feder, winklige Feder aber auch als Stab bzw. Torsionsfeder ausgebildet sein.

Ein Federelement 4 für die Schalt-, Steuer- und/oder Sensoreinrichtung 1 gemäß der vorliegenden Erfindung kann glatt oder profiliert sein. Es ist lediglich wichtig, dass das Federelement 4 in wenigstens einer Richtung elastisch ist und wenigstens einen elektrischen Leiter aufweist.

Der elektrische Leiter ist in den in den Figuren gezeigten Beispielen ein elektrisch leitfähiger Faden oder ein Draht. Der elektrische Leiter 5 kann jedoch grundsätzlich auch die Form eines Bandes, eines Strickes oder in Form zusammenhängender Fasern ausgebildet sein.

Die Figuren 5 bis 10 zeigen schematisch vorteilhafte Ausführungsvarianten der Schalt-, Steuer- und/oder Sensoreinrichtung 1 gemäß der vorliegenden Erfindung in der Draufsicht. Anstelle der in Figur 5 bis 10 gezeigten Ausführungsvarianten sind jedoch noch weitere, dem jeweiligen Anwendungszweck angepasste geometrische Abwandlungen denkbar.

Figur 5 zeigt eine Ausführungsvariante der Schalt-, Steuer- und/oder Sensoreinrichtung 1, in welcher das Steuerelement 2 mit zwei im Winkel von 90° zueinander angeordneten Federelementen 4 verbunden ist und die Federelemente 4 auf ihrer dem Steuerelement 2 abgewandten Seite jeweils mit einem starren Festkörper 3 verbunden sind. Hierfür ist es nicht erforderlich, dass die Federelemente 4 mit dem gleichen starren Festkörper 3 verbunden sind. Es ist lediglich eine feste Aufhängung für jedes der Federelemente 4 erforderlich, um jeweils Festkörpergelenke auszubilden.

Figur 6 zeigt schematisch eine weitere Ausführungsmöglichkeit der Schalt-, Steuer-und/oder Sensoreinrichtung 1, wobei hier drei, im Winkel von 120° zueinander angeordnete Federelemente 4 vorgesehen sind. Die Federelemente 4 sind mittig mit einem Steuerelement 2 verbunden, über welches eine Kraft auf jedes der Federelemente 4 übertragen werden kann. Auf ihrer dem Steuerelement 2 abgewandten Seite sind die Federelemente 4 jeweils mit wenigstens einem starren Festkörper 3 verbunden.

Figur 7 zeigt schematisch ein weiteres Ausführungsbeispiel der Schalt-, Steuer- und/oder Sensoreinrichtung 1 der vorliegenden Erfindung, wobei das Federelement 4 in der Draufsicht winklig ausgebildet ist und in jeder Richtung des Winkels jeweils einen separaten elektrischen Leiter aufweist, so dass Dehnungen oder Stauchungen des Federelementes 4 in unterschiedlichen Betätigungsrichtungen des Steuerelementes 2 erfasst werden können.

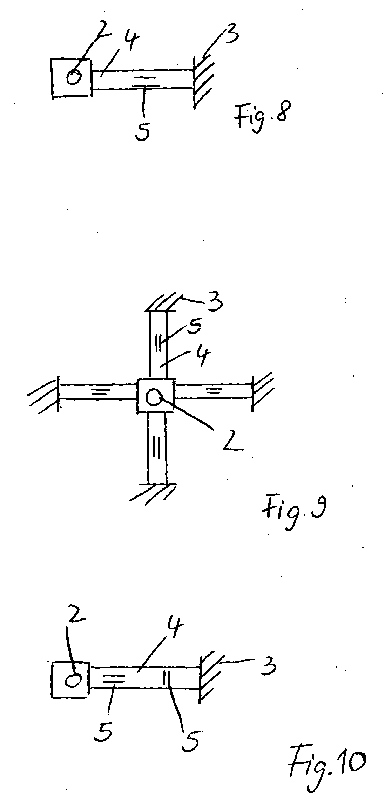

Figur 8 zeigt schematisch eine Ausführungsform der Schalt-, Steuer- und/oder Sensoreinrichtung 1 in ihrer einfachsten Form, wobei lediglich ein Federelement 4 mit einem elektrischen Leiter 5 vorgesehen ist, das einseitig mit dem Steuerelement 2 verbunden ist und dessen andere Seite fest mit einem starren Festkörper 3 verbunden ist, um ein Festkörpergelenk auszubilden.

Figur 9 zeigt eine weitere Möglichkeit der Ausgestaltung der erfindungsgemäßen Schalt-, Steuer- und/oder Sensoreinrichtung 1. Die in Figur 9 gezeigte Variante entspricht im Wesentlichen der Ausführungsform von Figur 1, wobei hier auf die obigen Ausführungen zu Figur 1 verwiesen wird.

Wie in der Ausführungsvariante von Figur 10 für die erfindungsgemäße Schalt-, Steuer-und/oder Sensoreinrichtung 1 gezeigt, kann das Federelement 4 als eine Blattfeder ausgebildet sein, in welcher mehrere elektrische Leiter 5 vorgesehen sind, welche in unterschiedlichen Winkeln zueinander angeordnet sind. Anstatt der in Figur 10 gezeigten zwei elektrischen Leiter 5 können auch mehr elektrische Leiter 5 auf bzw. in einem Federelement 4 vorgesehen sein, um als Dehnungsmessstreifen für die Erfassung von Dehnungen oder Stauchungen des Federelementes 4 in unterschiedlichen Bewegungsrichtungen des Steuerelementes 2 zu dienen.

Die Schalt-, Steuer- und/oder Sensoreinrichtung 1 gemäß der vorliegenden Erfindung eignet sich insbesondere als Joystick, um Bewegungen bzw. Betätigungen des Steuerelementes 2 zu erfassen und als ein Schalt-, Steuer- und/oder Sensorsignal auszugeben. Die Schalt-, Steuer- und/oder Sensoreinrichtung 1 kann ferner auch als Gaspedal oder auch als Überwachungselement für eine passive Struktur, wie beispielsweise in einem Windflügel, zur Überwachung von auf die passive Struktur einwirkenden Kraftkomponenten verwendet werden. Die Schalt-, Steuer- und/oder Sensoreinrichtung kann in beliebigen geometrischen Abmessungen und Formen ausgebildet sein.

Auch wenn in den oben beschriebenen Ausführungsvarianten der Erfindung die Federelemente 4 aus einer duroplastischen Matrix aufgebaut sind, ist es grundsätzlich auch möglich, ein Federelement 4 aus einem thermoplastischen Material herzustellen, welches sich gut spritzen lässt. Das Federelement 4 kann auch aus einem Elastomer ausgebildet sein.

In der vorliegenden Erfindung dient das wenigstens eine Federelement 4 der Schalt-und/oder Steuereinrichtung 1 der Signalgenerierung. Auch wenn in den oben beschriebenen Beispielen für die Federelemente 4 federnde Kunststoffstrukturen gezeigt wurden, kann das wenigstens eine Federelement 4 auch aus einem anderen federnden Material wie zum Beispiel Gummi oder Stahl ausgebildet sein.

In den oben gezeigten Beispielen ist zudem das Steuerelement 2 direkt mit dem wenigstens einen Federelement 4 verbunden. Das Steuerelement 2 kann jedoch auch über ein Lager oder eine Zwischenverbindung mit dem wenigstens einen Federelement 4 verbunden sein, um auf dieses eine Kraft übertragen zu können.

Um mit Hilfe der erfindungsgemäßen Schalt-, Steuer- und/oder Sensoreinrichtung 1 einen geeigneten Joystick auszubilden, muss die Schalt- und/oder Steuereinrichtung 1 Krafteinwirkungen in wenigstens zwei Richtungen erfassen können. Es sind hierfür dann wenigstens zwei Strukturen zur Dehnungserfassung vorzusehen, die durch elektrische Leiter 5 auszubilden sind, wobei die Strukturen zur Dehnungserfassung in unterschiedlichen Richtungen anzuordnen sind. Vorzugsweise bietet sich hierfür ein Winkel zwischen den Strukturen zur Dehnungserfassung von 90° an, wobei jedoch auch andere Winkel wie zum Beispiel 120° möglich sind.

Auch wenn in den oben genannten Beispielen jeweils nur einzelne elektrische Leiter 5 gezeigt sind, können die elektrischen Leiter 5 auch miteinander durch Nähen oder Sticken verschaltet sein.

Das in den Ausführungsbeispielen erwähnte textile Material 6 ist zudem nicht auf ein einzelnes Material beschränkt. Es kann beispielsweise ein Schaum mit mehreren textilen Lagen sein.

Im Folgenden wird anhand der Figuren 1 bis 3 die Vorgehensweise zum Herstellen der Schalt-, Steuer- und/oder Sensoreinrichtung 1 gemäß der vorliegenden Erfindung beschrieben.

Um eine Schalt-, Steuer- und/oder Sensoreinrichtung 1 gemäß der vorliegenden Erfindung herzustellen, ist ein betätigbares Steuerelement 2 wie beispielsweise der in Figur 1 gezeigte Schalthebel, wenigstens ein starrer Festkörper 3 und wenigstens ein Material für ein Federelement 4 vorzusehen.

Wie in Figur 2 gezeigt, wird ein elektrischer Leiter 5 mit einem elektrisch leitfähigen Faden oder einem Draht in ein textiles Material 6 genäht oder gestickt. In anderen Ausführungsvarianten der Erfindung kann auch ein einfacher elektrischer Leiter 5, wie z. B. ein Metallstreifen, in ein zumindest teilweise flexibles Trägermaterial 7 eingebracht werden, um hieraus ein Federelement 4 auszubilden. Vorzugsweise wird der Leiter 5 mäanderförmig in das textile Material 6 genäht oder gestickt. Wie in Figur 3 gezeigt, kann der elektrische Leiter 5 auch dreidimensional durch Nähen oder Sticken in das textile Material 6 eingebracht werden.

Der elektrische Leiter 5 ist so in das textile Material 6 zu nähen oder zu sticken, dass Enden des elektrisch leitfähigen Fadens oder Drahtes von außen beispielsweise über Kontakte 9 kontaktierbar sind.

Wie in Figur 3 veranschaulicht, wird der zuvor in das textile Material 6 genähte oder gestickte elektrische Leiter im Folgenden in ein Federelement 4 eingebracht bzw. es wird aus einem in ein Trägermaterial 7 eingebetteten elektrischen Leiter 5 das Federelement 4 ausgebildet. In dem in Figur 3 gezeigten Beispiel wird der elektrische Leiter hierfür in ein Trägermaterial 7 eingegossen, wobei es grundsätzlich auch möglich ist, dass das textile Material 6 mit dem elektrischen Leiter 5 durch ein Trägermaterial 7 umspritzt wird. Das Trägermaterial 7 muss hierfür gieß- oder spritzbar sein und nachfolgend aushärten sowie nach dem Härten zumindest teilweise elastische Eigenschaften aufweisen.

Im Hinblick auf Figur 1 wird im Folgenden das wenigstens eine Federelement 4 mit wenigstens einem starren Festkörper 3 verbunden, um ein Festköpergelenk auszubilden. Weiterhin wird das Steuerelement 2 an der federnden Seite des Federelementes 4 mit dem Federelement 4 verbunden. Wie in Figur 1 gezeigt, kann das Steuerelement 2 mit mehreren Federelementen 4 verbunden werden, um auf diese eine Kraftwirkung ausüben zu können.

## Patentansprüche

1. Schalt-, Steuer- und/oder Sensoreinrichtung (1) mit wenigstens einem betätigbaren Steuerelement (2), das an wenigstens einem mit wenigstens einem starren Festkörper (3) verbundenen Federelement (4) so befestigt ist, dass das wenigstens eine Federelement (4) in wenigstens einer Richtung elastisch ist, wobei das wenigstens eine Federelement (4) wenigstens einen elektrischen Leiter (5) aufweist, **dadurch gekennzeichnet, dass** der elektrische Leiter (5) genäht oder gestickt befestigt ist.

2. Schaft-, Steuer- und/oder Sensoreinrichtung nach Anspruch 1, **dadurch gekennzeichnet, dass** der elektrische Leiter (5) eine Struktur zur Dehnungserfassung bzw. -messung ist.

3. Schaft-, Steuer- und/oder Sensoreinrichtung nach einem der vorhergehenden Ansprüche, **dadurch gekennzeichnet, dass** der elektrische Leiter (5) ein elektrisch leitfähiger Faden oder ein Draht ist.

4. Schalt-, Steuer und/oder Sensoreinrichtung nach einem der vorhergehenden Ansprüche, **dadurch gekennzeichnet, dass** der elektrische Leiter (5) in ein textiles Material (6) genäht oder gestickt ist

5. Schalt-, Steuer- und/oder Sensoreinrichtung nach Anspruch 4, **dadurch gekennzeichnet, dass** das Trägermaterial (7) ein gieß- und/oder spritzbares und härtbares Material ist, das nach dem Härten zumindest teilweise elastisch ist.

6. Schaft-, Steuer- und/oder Sensoreinrichtung nach einem der vorhergehenden Ansprüche, **dadurch gekennzeichnet, dass** das wenigstens eine Federelement (4) aus einem duroplastischen Material ausgebildet ist und in ein thermoplastisches Material eingebracht ist.

7. Schalt-, Steuer- und/oder Sensoreinrichtung nach einem der vorhergehenden Ansprüche, **dadurch gekennzeichnet, dass** der elektrische Leiter (5) mäanderformig ausgebildet ist.

8. Schaft-, Steuer- und/oder Sensoreinrichtung nach Anspruch 4 oder 5, **dadurch gekennzeichnet, dass** das Trägermaterial (7) ein kunststoffhaltiger Faserverbundwerkstoff ist.

9. Schalt-, Steuer- und/oder Sensoreinrichtung nach einem der vorhergehenden Ansprüche, **dadurch gekennzeichnet, dass** der elektrische Leiter (5) dreidimensional ausgebildet ist.

10. Schalt-, Steuer- und/oder Sensoreinrichtung nach Anspruch 9, **dadurch gekennzeichnet, dass** der elektrische Leiter (5) unterschiedliche Längen in einer Längenrichtung (I), einer Breitenrichtung (b) und einer Höhenrichtung (h) des Federelementes (4) aufweist.

11. Schalt-, Steuer- und/oder Sensoreinrichtung nach einem der vorhergehenden Ansprüche, **dadurch gekennzeichnet, dass** das wenigstens eine Federelement (4) eine Blattfeder, eine gebogene Feder, eine winklige Feder oder eine Torsionsfeder ist.

12. Schalt-, Steuer- und/oder Sensoreinrichtung nach einem der vorhergehenden Ansprüche, **dadurch gekennzeichnet, dass** die Schalt-, Steuer- und/oder Sensoreinrichtung (1) wenigstens zwei miteinander verbundene Federelemente (4) aufweist, die in einem Winkel zueinander angeordnet sind.

13. Schalt-, Steuer- und/oder Sensoreinrichtung nach Anspruch 12, **dadurch gekennzeichnet, dass** die Federelemente (4) in einem Winkel von 90° zueinander angeordnet sind.

14. Schalt-, Steuer- und/oder Sensoreinrichtung nach einem der vorhergehenden Ansprüche, **dadurch gekennzeichnet, dass** die Schalt-, Steuer- und/oder Sensoreinrichtung (1) telemetrisch mit einem Empfänger verbunden ist.

15. Schalt-, Steuer- und/oder Sensoreinrichtung nach einem der vorhergehenden AnSprüche, **dadurch gekennzeichnet, dass** die Schalt-, Steuer- und/oder Sensoreinrichtung (1) wenigstens eine Piezostruktur aufweist, durch welche die Schalt-, Steuer- und/oder Sensoreinrichtung (1) und/oder eine telemetrische Verbindung mit Energie versorgt wird.

16. Verfahren zum Herstellen einer Schalt-, Steuer- und/oder Sensoreinrichtung (1) nach einem der vorhergehenden Ansprüche, wobei das Verfahren folgende Schritte aufweist:
- Vorsehen eines betätigbaren Steuerelementes (2), wenigstens eines starren Festkörpers (3), wenigstens eines Materials für wenigstens ein Federelement (4) und wenigstens eines elektrischen Leiters (5);
- Einbringen des wenigstens einen elektrischen Leiters (5) in das Material des wenigstens einen Federelementes (4);
- Verbinden des wenigstens einen Federelementes (4) mit dem wenigstens einen starren Festkörper (3), und
- Befestigen des Steuerelementes (2) mit dem wenigstens einen Federelement (4), **dadurch gekennzeichnet, dass** der elektrische Leiter (5) genäht oder gestickt wird.

17. Verfahren nach Anspruch 16, **dadurch gekennzeichnet, dass** als elektrischer Leiter (5) eine Struktur zur Dehnungsmessung in das Federelement (4) eingebracht wird.

18. Verfahren nach Anspruch 16 oder 17, **dadurch gekennzeichnet, dass** der elektrische Leiter (5) in oder auf ein textiles Material genäht oder gestickt wird und das textile Material in ein Trägermaterial (7) eingegossen oder von einem Trägermaterial (7) umspritzt wird.

19. Verfahren nach einem der Ansprüche 16 bis 18, **dadurch gekennzeichnet, dass** der elektrische Leiter (5) mäanderförmig ausgebildet wird.

20. Verfahren nach einem der Ansprüche 16 bis 19, **dadurch gekennzeichnet, dass** der elektrische Leiter (5) dreidimensional ausgebildet wird.

## Claims

1. Switching, controlling and/or sensor device (1) having at least one actuatable control element (2) which is fastened to at least one spring element (4), which is connected to at least one rigid solid body (3), in such a manner that the at least one spring element (4) is elastic in at least one direction, the at least one spring element (4) having at least one electrical conductor (5), **characterized in that** the electrical conductor (5) is fastened in a sewn or stitched manner.

2. Switching, control and/or sensor device according to Claim 1, **characterized in that** the electrical conductor (5) is a structure for detecting or measuring stretching.

3. Switching, control and/or sensor device according to one of the preceding claims, **characterized in that** the electrical conductor (5) is an electrically conductive thread or a wire.

4. Switching, control and/or sensor device according to one of the preceding claims, **characterized in that** the electrical conductor (5) is sewn or stitched into a textile material (6).

5. Switching, control and/or sensor device according to Claim 4, **characterized in that** the carrier material (7) is a mouldable and/or injectable and curable material which is at least partially elastic after curing.

6. Switching, control and/or sensor device according to one of the preceding claims, **characterized in that** the at least one spring element (4) is formed from a thermosetting material and is introduced into a thermoplastic material.

7. Switching, control and/or sensor device according to one of the preceding claims, **characterized in that** the electrical conductor (5) is meandering.

8. Switching, control and/or sensor device according to Claim 4 or 5, **characterized in that** the carrier material (7) is a plastic-containing fibre composite material.

9. Switching, control and/or sensor device according to one of the preceding claims, **characterized in that** the electrical conductor (5) is three-dimensional.

10. Switching, control and/or sensor device according to Claim 9, **characterized in that** the electrical conductor (5) has different lengths in a length direction (I), a width direction (b) and a height direction (h) of the spring element (4).

11. Switching, control and/or sensor device according to one of the preceding claims, **characterized in that** the at least one spring element (4) is a leaf spring, a curved spring, an angular spring or a torsion spring.

12. Switching, control and/or sensor device according to one of the preceding claims, **characterized in that** the switching, control and/or sensor device (1) has at least two spring elements (4) which are connected to one another and are arranged at an angle with respect to one another.

13. Switching, control and/or sensor device according to Claim 12, **characterized in that** the spring elements (4) are arranged at an angle of 90° with respect to one another.

14. Switching, control and/or sensor device according to one of the preceding claims, **characterized in that** the switching, control and/or sensor device (1) is telemetrically connected to a receiver.

15. Switching, control and/or sensor device according to one of the preceding claims, **characterized in that** the switching, control and/or sensor device (1) has at least one piezostructure which supplies the switching, control and/or sensor device (1) and/or a telemetric connection with energy.

16. Method for producing a switching, control and/or sensor device (1) according to one of the preceding claims, the method having the following steps:
- providing an actuatable control element (2), at least one rigid solid body (3), at least one material for at least one spring element (4) and at least one electrical conductor (5);
- introducing the at least one electrical conductor (5) into the material of the at least one spring element (4);
- connecting the at least one spring element (4) to the at least one rigid solid body (3), and
- fastening the control element (2) to the at least one spring element (4), **characterized in that** the electrical conductor (5) is sewn or stitched.

17. Method according to Claim 16, **characterized in that** a structure for measuring stretching is introduced into the spring element (4) as the electrical conductor (5).

18. Method according to Claim 16 or 17, **characterized in that** the electrical conductor (5) is sewn or stitched into or onto a textile material and the textile material is moulded into a carrier material (7) or has a carrier material (7) moulded around it.

19. Method according to one of Claims 16 to 18, **characterized in that** the electrical conductor (5) is meandering.

20. Method according to one of Claims 16 to 19, **characterized in that** the electrical conductor (5) is three-dimensional.

## Revendications

1. Dispositif de commutation, de commande et/ou de détection (1) comportant au moins un élément de commande actionnable (2) qui est fixé à au moins un élément de ressort (4) relié à au moins un corps solide rigide (3) de telle sorte que ledit au moins un élément de ressort (4) soit élastique dans au moins une direction, dans lequel l'au moins un élément de ressort (4) comprend au moins un conducteur électrique (5), **caractérisé en ce que** le conducteur électrique (5) est fixé par couture ou broderie.

2. Dispositif de commutation, de commande et/ou de détection selon la revendication 1, **caractérisé en ce que** le conducteur électrique (5) est une structure de détection de contrainte ou de mesure.

3. Dispositif de commutation, de commande et/ou de détection selon l'une quelconque des revendications précédentes, **caractérisé en ce que** le conducteur électrique (5) est un brin ou un fil électriquement conducteur.

4. Dispositif de commutation, de commande et/ou de détection selon l'une quelconque des revendications précédentes, **caractérisé en ce que** le conducteur électrique (5) est cousu ou brodé dans un matériau textile (6).

5. Dispositif de commutation, de commande et/ou de détection selon la revendication 4, **caractérisé en ce que** le matériau de support (7) est un matériau pouvant être coulé ou pulvérisé et durcissable qui est au moins partiellement élastique après durcissement.

6. Dispositif de commutation, de commande et/ou de détection selon l'une quelconque des revendications précédentes, **caractérisé en ce que** l'au moins un élément de ressort (4) est formé d'un matériau thermodurcissable et est incorporé à un matériau thermoplastique.

7. Dispositif de commutation, de commande et/ou de détection selon l'une quelconque des revendications précédentes, **caractérisé en ce que** le conducteur électrique (5) est réalisé de manière à former des méandres.

8. Dispositif de commutation, de commande et/ou de détection selon la revendication 4 ou 5, **caractérisé en ce que** le matériau de support (7) est un matériau composite à fibres contenant des matières plastiques.

9. Dispositif de commutation, de commande et/ou de détection selon l'une quelconque des revendications précédentes, **caractérisé en ce que** le conducteur électrique (5) est formé en trois dimensions.

10. Dispositif de commutation, de commande et/ou de détection selon la revendication 9, **caractérisé en ce que** le conducteur électrique (5) présente des longueurs différentes dans une direction longitudinale (I), une direction latitudinale (b) et une direction de la hauteur (h) de l'élément de ressort (4).

11. Dispositif de commutation, de commande et/ou de détection selon l'une quelconque des revendications précédentes, **caractérisé en ce que** l'au moins un élément de ressort (4) est un ressort à lame, un ressort incurvé, un ressort coudé ou un ressort de torsion.

12. Dispositif de commutation, de commande et/ou de détection selon l'une quelconque des revendications précédentes, **caractérisé en ce que** le moyen de commutation, de commande et/ou de détection (1) comprend au moins deux éléments de ressort (4) reliés l'un à l'autre, qui sont disposés de manière à former un certain angle l'un par rapport à l'autre.

13. Dispositif de commutation, de commande et/ou de détection selon la revendication 12, **caractérisé en ce que** les éléments de ressort (4) sont disposés de manière à former un angle de 90° l'un par rapport à l'autre.

14. Dispositif de commutation, de commande et/ou de détection selon l'une quelconque des revendications précédentes, **caractérisé en ce que** le dispositif de commutation, de commande et/ou de détection (1) est connecté par télémétrie à un récepteur.

15. Dispositif de commutation, de commande et/ou de détection selon l'une quelconque des revendications précédentes, **caractérisé en ce que** le dispositif de commutation, de commande et/ou de détection (1) comprend au moins une structure piézoélectrique au moyen de laquelle le dispositif de commutation, de commande et/ou de détection (1) et/ou une connexion de télémétrie est/sont alimenté(s) en énergie.

16. Procédé de production d'un dispositif de commutation, de commande et/ou de détection (1) selon l'une quelconque des revendications précédentes, ledit procédé comprenant les étapes consistant à :
- prévoir un élément de commande pouvant être actionné (2), au moins un corps solide rigide (3), au moins un matériau destiné à au moins un élément de ressort (4) et au moins un conducteur électrique (5) ;
- introduire l'au moins un conducteur électrique (5) dans le matériau de l'au moins un élément de ressort (4);
- relier l'au moins un élément de ressort (4) à l'au moins un corps solide rigide (3), et
- fixer l'élément de commande (2) à l'au moins un élément de ressort (4), **caractérisé en ce que** le conducteur électrique (5) est cousu ou brodé.

17. Procédé selon la revendication 16, **caractérisé en ce qu'**une structure destinée à mesurer la contrainte dans l'élément de ressort (4) est utilisée en tant que conducteur électrique (5).

18. Procédé selon la revendication 16 ou 17, **caractérisé en ce que** le conducteur électrique (5) est cousu ou brodé dans ou sur un matériau textile et **en ce que** le matériau textile est coulé dans un matériau de support (7) ou est encapsulé par un matériau de support (7).

19. Procédé selon l'une quelconque des revendications 16 à 18, **caractérisé en ce que** le conducteur électrique (5) est réalisé de manière à former des méandres.

20. Procédé selon l'une quelconque des revendications 16 à 19, **caractérisé en ce que** le conducteur électrique (5) est formé en trois dimensions.
